# EUROPEAN PATENT APPLICATION

(11) **EP 2 182 431 A1**
(43) Date of publication of application: **05.05.2010**
(21) Application number: 09252135.0
(22) Date of filing: 04.09.2009
(51) Int. Cl.: G06F 3/048

(54) **Information processing**

(30) Priority: 28.10.2008 JP 2008276227
(71) Applicant: Sony Corporation, Tokyo (JP)
(72) Inventor: Ikeda, Tetsuo, Tokyo (JP); Aoyama, Ryu, Tokyo (JP); Ueno, Hiroshi, Tokyo (JP)
(74) Representative: Scaddan, Gareth Casey

(57) **Abstract**

The information processing apparatus includes an input position detecting unit that detects a position of an operator positioned on an operation input unit; a direction detecting unit that detects a moving direction of the operator based on a time variation of the detected position of the operator; a reproduction speed changing unit that changes a reproduction speed of the contents that vary with elapse of time displayed in a screen according to the number of operators detected by the input position detecting unit, and a reproducing direction changing unit that changes a reproducing direction of the contents displayed in the screen according to the moving direction of the of the operator detected by the direction detecting unit.

## Description

### Field of Invention

The present invention relates to an information processing apparatus, an information processing method, and a program.

### Background of the Invention

In recent years, a portable-type information processing apparatus having a touch panel and a touch pad (called a touch panel hereinafter) mounted thereon has been widely spread. Such a portable-type information processing apparatus includes, for example, a cell-phone, PHS (Personal Handy-phone System), a portable-type moving picture player, a portable-type music player, PDA (Personal Digital Assistant), or the like. Further, in recent years, a television receiver, a portable game machine, and a remote controlling unit, etc, have also the touch panel mounted thereon. Some of these information processing apparatuses do not have an operation unit other than the touch panel. A user utilizing such an information processing apparatus needs to perform almost all operations by utilizing the touch panel.

For example, Japanese Patent Application Laid-Open No. 08-76926 discloses a technique of changing the number of pages for turning a screen according to the number of touching means for touching the surface of the touch panel. Also, Japanese Patent Application Laid-Open No. 11-119911 discloses a technique of switching an operation of an apparatus, according to the number of fingers, an operating direction, an operation pressure, and an operation speed, when a touch switch is operated by fingers, etc.

However, in the technique of Japanese Patent Application Laid-Open No. 08-76926, when information is retrieved from display contents, a position displaying desired information needs to be searched through a trial and error process while appropriately changing the number of touching means for operating the touch panel, thus involving an issue that time is taken for retrieval.

Further, in the technique described in Japanese Patent Application Laid-Open No. 11-119911, when the touch switch is operated, the user needs to grasp an operation method in advance, such as the number of fingers, the operating direction, the operation pressure, and the operation speed, thus involving an issue that operability is deteriorated.

Therefore, embodiments of the present invention have been made in view of the above-described issues, and seek to provide a new and improved information processing apparatus, an information processing method, and a program, capable of performing retrieval of displayed contents with easy operation, and capable of easily performing a fine adjustment of a reproduction speed.

### Summary of the Invention

Various respective aspects and features of the invention are defined in the appended claims. Combinations of features from the dependent claims may be combined with features of the independent claims as appropriate and not merely as explicitly set out in the claims.

According to an embodiment of the present invention, there is provided an information processing apparatus includes an input position detecting unit that detects a position of an operator positioned on an operation input unit, a direction detecting unit that detects a moving direction of the operator based on a time variation of the detected position of the operator, a reproduction speed changing unit that changes a reproduction speed of contents varying with elapse of time displayed in a screen according to the number of operators detected by the input position detecting unit, and a reproducing direction changing unit that changes a reproducing direction of the contents displayed in the screen according to the moving direction of the operator detected by the direction detecting unit.

According to such a configuration, an input position detecting unit detects the position of the operator positioned on the operation input unit, and the direction detecting unit detects the moving direction of the operator based on a time variation of the detected position of the operator. In addition, the reproduction speed changing unit changes the reproduction speed of the contents displayed in the screen, which is variable with the elapse of time according to the number of operators detected by the input position detecting unit. Further, the reproducing direction changing unit changes the reproducing direction of the contents displayed in the screen according to the moving direction of the operator detected by the direction detecting unit.

The input position detecting unit may preferably output coordinates of the operator positioned on the operation input unit, and the reproduction speed changing unit may change the reproduction speed according to the number of coordinates of the operators simultaneously transmitted from the input position detecting unit.

The reproduction speed changing unit may preferably increase the reproduction speed as the number of the operators is increased, and decrease the reproduction speed as the number of the operators is decreased.

The reproducing direction changing unit may preferably change the reproducing direction to a direction of forwarding a reproduction elapse time of the contents when the moving direction is approximately the same as a direction of elapse time in the contents, and the reproducing direction may be changed to a direction of rewinding the reproduction elapse time of the contents when the moving direction is opposite to the direction of elapse time in the contents.

The direction detecting unit may select a direction corresponding to a sum of vectors formed by a locus drawn by each of the operators as the moving direction, when the number of the operators is plural number.

The direction detecting unit may preferably determine a movement of the operators when the coordinates of the operators transmitted from the input position detecting unit change to a predetermined threshold value or more.

According to another embodiment of the present invention, there is provided an information processing method includes the steps of detecting a position of an operator positioned on an operation input unit, detecting a moving direction of the operator based on a time variation of the detected position of the operator, changing a reproduction speed of contents varying with elapse of time displayed in a screen according to the number of detected operators, and changing a reproducing direction of the contents displayed in the screen according to the moving direction of the operator detected by the direction detecting unit.

According to another embodiment of the present invention, there is provided a program for causing a computer having an operation input unit to realize an input position detecting function of detecting a position of an operator positioned on the operation input unit, a direction detecting function of detecting a moving direction of the operator based on a time variation of the detected position of the operator, a reproduction speed changing function of changing a reproduction speed of contents varying with elapse of time displayed in a screen according to the number of operators detected by the input position detecting function, and a reproducing direction changing function of changing a reproducing direction of the contents displayed in the screen according to a moving direction of the operator detected by the direction detecting function.

According to such a configuration, the computer program is stored in the storage unit of a computer and makes a computer function as the aforementioned information processing apparatus, by being read into the CPU of the computer and executed. Further, a computer readable recording medium, in which the computer program is recorded, can also be provided. For example, a magnetic disc, an optical disc, a magnetooptic disc, and a flush memory, or the like can be given as the recording medium. Moreover, the aforementioned computer program may also be distributed, for example, through a network, without using the recording medium.

According to embodiments of the present invention, retrieval of the displayed contents can be performed with easy operation, and the fine adjustment of the reproduction speed can be easily performed.

### Brief Description of the Drawings

Embodiments of the invention will now be described with reference to the accompanying drawings, throughout which like parts are referred to by like references, and in which:
FIG. 1 is an explanatory view for explaining an example of an outer appearance of an information processing apparatus according to a first embodiment of the present invention;
FIG. 2 is an explanatory view for explaining an example of the outer appearance of the information processing apparatus according to the embodiment;
FIG. 3 is a block diagram for explaining a function of the information processing apparatus according to the embodiment;
FIG. 4 is an explanatory view for explaining an example of an information processing method according to the embodiment;
FIG. 5 is an explanatory view for explaining an example of the information processing method according to the embodiment;
FIG. 6 is an explanatory view for explaining an example of the information processing method according to the embodiment;
FIG. 7 is a flowchart for explaining an example of the information processing method according to the embodiment;
FIG. 8 is an explanatory view for explaining an example of the information processing method according to the embodiment; and
FIG. 9 is a block diagram for explaining a hardware configuration of the information processing apparatus according to each embodiment of the present invention.

### Description of the Example Embodiments

Hereinafter, example embodiments of the present invention will be described in detail with reference to the appended drawings. Note that, in the specification and the appended drawings, structural elements that have substantially the same function and structure are denoted with the same reference numerals, and repeated explanation of these structural elements is omitted.

The explanation will be given in an order as described below.
(1) Object
(2) First embodiment
   (2-1) Regarding an overall configuration of the information processing apparatus
   (2-2) Regarding a functional configuration of the information processing apparatus
   (2-3) Regarding an information processing method
   (2-4) Regarding an example of an application to a moving picture reproduction
(3) Regarding a hardware configuration of the information processing apparatus according to embodiments of the present invention
(4) Summary

### <Object>

In the related art, an operation system using a hardware button on the remote controlling unit and using a GUI button on the display screen, uses a method of arranging a plurality of buttons according to a seeking speed, such as flush, skip, fast-forwarding, chapter-forwarding speeds, or the like. Therefore, there is an issue that an arrangement area on the remote controlling unit and the screen is largely occupied by such plurality of buttons. Also there is an issue that due to existence of a plurality of buttons having similar effects, a user is likely to be confused in selecting a button for locating a desired place of the contents.

In addition, in a gesture operation system by one finger on a touch panel in related art, a lateral operation is respectively allotted to meanings such as "forward" and "next". However, if one parameter is allotted to the lateral gesture operation, there is an issue that other parameter needs to be allotted to a vertical direction. For example, in a music playback screen of a car navigation system, etc, lateral flicks are used as "skip of several seconds", and vertical flicks are used as "next music/previous music". However, compared to the lateral direction, in a case of the vertical direction, a concept of "which is the preceding music or the next music" is hardly recalled, thus posing an issue that malfunction is caused and the user is forced to learn regarding the operation method.

Therefore, it is desirable to provide a method capable of solving the above-described issue, capable of performing retrieval of the displayed contents by easy operation, and capable of easily performing fine adjustment of the reproduction speed, and embodiments of the present invention seek to achieve a technique as will be described hereunder.

### (First embodiment)

### <Regarding an overall configuration of the information processing apparatus>

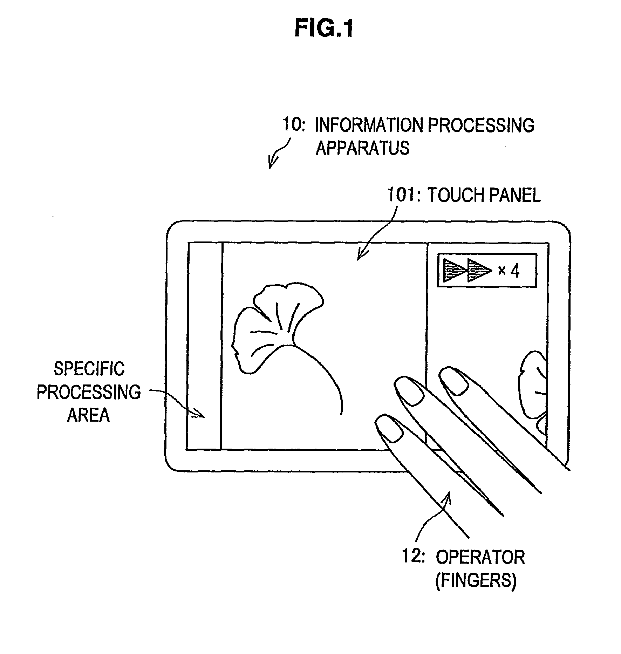

First, an overall configuration of the information processing apparatus according to a first embodiment of the present invention will be described with reference to FIG. 1. FIG. 1 is an explanatory view for describing an outer appearance of an information processing apparatus 10 according to this embodiment. Note that in the description hereunder, a case that the information processing apparatus 10 executes a map application for displaying a map on a display screen of a display unit is taken as an example.

As shown in FIG. 1, a display unit (abbreviated as a touch panel 101 hereinafter) including a touch panel 101 is provided in the information processing apparatus 10. As shown in FIG. 1, each kind of information such as a moving picture content is displayed in the touch panel 101. Then, predetermined processing such as scrolling is applied to each kind of information shown in the touch panel 101, corresponding to touch and movement of an operator 12. In addition, a specific processing area may also be provided in the touch panel 101. In this specific processing area, for example, an object such as an icon for executing predetermined processing is displayed, and by selecting this specific display area, the predetermined processing corresponding to the displayed object is executed.

The information processing apparatus 10 does not apply only the specific processing such as selection of the object and movement of the display content, responding to the touch and movement of the operator 12. For example, when the operator 12 is moved while drawing a predetermined locus in a state of being touched on the touch panel 101, the information processing apparatus 10 executes predetermined processing corresponding to the locus drawn by the operator 12. Namely, the information processing apparatus 10 has a gesture input function. For example, when a predetermined gesture is input, an application corresponding to this gesture is activated, or predetermined processing corresponding to this gesture is executed.

For example, fingers of a user are used as the operator 12. Also, a stylus or a touch pen is sometimes used as the operator 12. Further, in a case of an optical touch panel 101, an arbitrary object can be the operator 12. For example, in the case of the optical touch panel 101, a soft tool such as a brush, which is hardly pressed against the touch panel 101, can also be used as the operator 12. Further, in the case of the optical touch panel with the touch panel 101 formed in-cell type, any object can be the operator 12 if shades are photographed in the touch panel 101.

Here, the in-cell type optical touch panel will be simply described. There are several kinds in the optical touch panel. For example, there is a relatively well known optical touch panel of a system that an optical sensor is provided in an outer frame of a liquid crystal panel constituting a liquid crystal display, and a position and a moving direction of the operator 12 touched on the liquid crystal panel is detected by this optical sensor. Unlike this system, the in-cell type optical touch panel has a mechanism of detecting the position and the moving direction of the operator 12 touched on the liquid crystal panel or closely approached thereto by an optical sensor array, with this optical sensor array mounted on the liquid crystal panel.

More specifically, an optical sensor and a read circuit are formed on a glass substrate of the optical touch panel, and light incident thereon from outside is detected by the optical sensor, and its intensity is read by the read circuit, to thereby recognize the shade of the operator 12. Thus, in the in-cell type optical touch panel, a shape and a touched surface, etc, of the operator 12 can be recognized based on the shade of the operator 12. Therefore, an operation by a touch "surface" which has been regarded as being difficult by other optical touch panel can be realized. In addition, by applying the in-cell type optical touch panel, it is possible to obtain merits such as improvement in recognition accuracy and display quality, and further improvement in design property of the liquid crystal display having such an in-cell type optical touch panel mounted thereon.

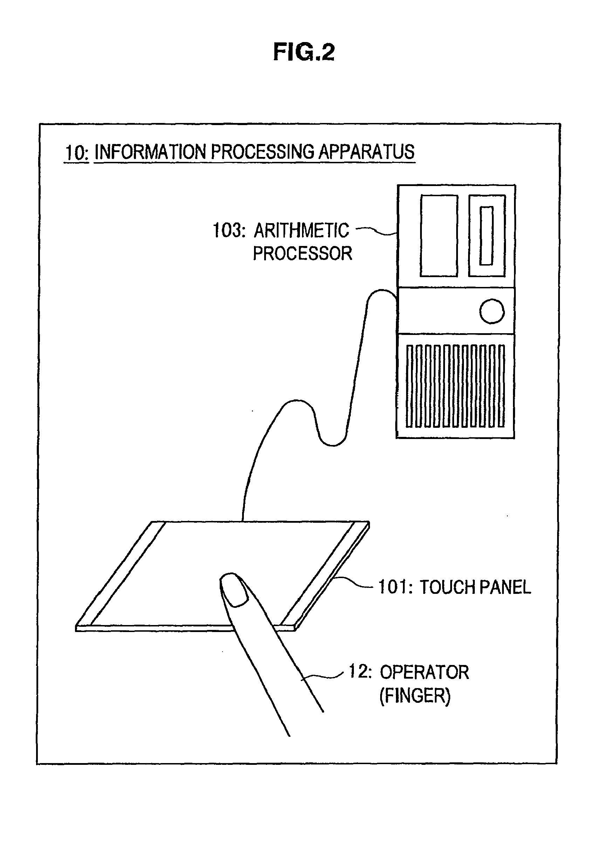

In addition, the configuration of the information processing apparatus 10 having the touch panel 101 mounted thereon can be changed, for example, as shown in FIG. 2. In an example of FIG. 2, the touch panel 101 constituting the information processing apparatus 10, and an arithmetic processor 103 for processing positional information ,etc, of the operator 12 detected by the touch panel 101, are formed separately. In a case of this constitutional example, processing of data generated according to the processing such as selection of the object and movement of the display content is executed by the arithmetic processor 103. Thus, the configuration of the information processing apparatus 10 can be freely deformed according to an embodiment.

In addition, the function of the information processing apparatus 10 is realized, for example, by a portable information terminal, a cell-phone, a portable game machine, a portable music player, broadcast equipment, a personal computer, a car navigation system, or information home electronics.

### <Regarding function configuration of the information processing apparatus>

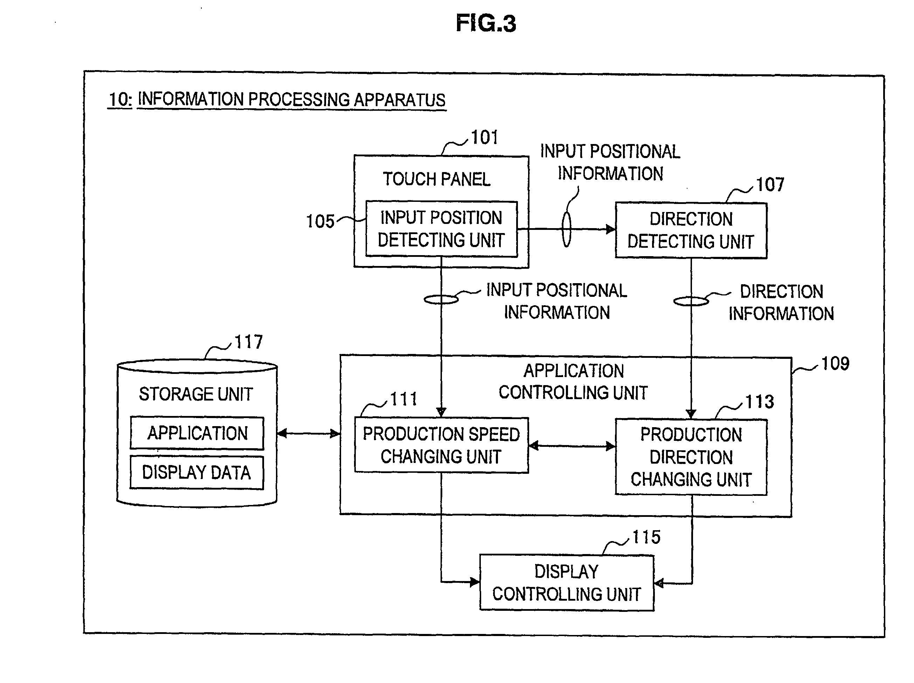

Subsequently, a function configuration of the information processing apparatus according to this embodiment will be described in detail with reference to FIG. 3. FIG. 3 is a block diagram for describing the function configuration of the information processing apparatus 10 according to this embodiment.

For example, as shown in FIG. 3, the information processing apparatus 10 according to this embodiment mainly includes the touch panel 101, the direction detecting unit 107, an application controlling unit 109, a display controlling unit 115, and a storage unit 117.

The touch panel 101 serves as an operation input unit provided in the information processing apparatus 10 according to this embodiment. This touch panel 101 may be the aforementioned optical touch panel, and also may be the in-cell type optical touch panel. This touch panel 101 may be integrally formed with the display unit (not shown) such as a display device of the information processing apparatus 100, or may be formed separately. This touch panel 101 further includes an input position detecting unit 105.

The input position detecting unit 105 detects the position of the touch panel 101 touched by the operator 12. The input position detecting unit 105 may also be formed so as to detect a pressing force added to the touch panel 101 when touched by the operator 12. Also, the input position detecting unit 105 may have the function of detecting an existence of the operator 12 in a space on the touch panel 101 in such a manner as approaching the touch panel 101, even if not directly being touched by the operator 12, and recognizing this position as a touch position. Namely, the touch position here may be the position including the positional information regarding a motion performed by the operator 12 so as to draw air on the screen of the touch panel 101.

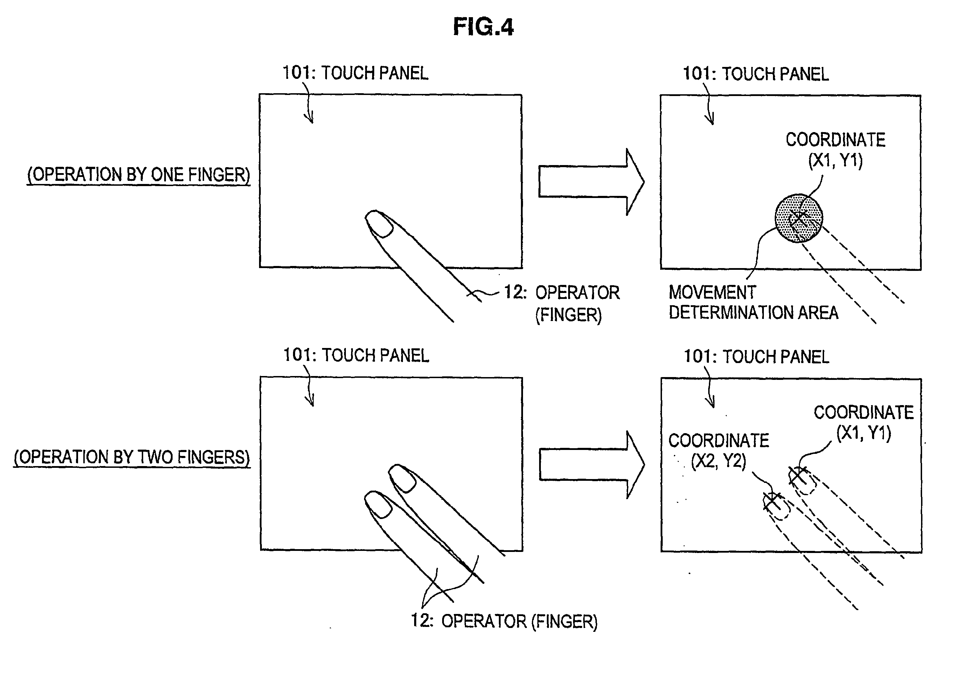

The input position detecting unit 105 transmits the information regarding the detected touch position (more specifically, the coordinate of the touch position), to the direction detecting unit 107 and the application controlling unit 109 as input positional information. For example, as shown in FIG. 4, when the number of the detected touch positions is one, the input position detecting unit 105 outputs one coordinate (X1, Y1) as input positional information. Also, when the number of the detected touch positions is two, the input position detecting unit 105 outputs the detected plurality of coordinates (X1, Y1), (X2, Y2).

The direction detecting unit 107 is constituted of, for example, CPU (Central Processing Unit), ROM (Read Only Memory), RAM (Random Access Memory), etc. The direction detecting unit 107 detects the moving direction of the operator 12 by using a coordinate value, being the input positional information transmitted from the input position detecting unit 105.

More specifically, the direction detecting unit 107 detects the moving direction of the operator 12 based on the change of the input positional information transmitted every predetermined time interval (for example, every several milliseconds to several hundred milliseconds). For example, as shown in FIG. 4, a movement determination area used for determining presence/absence of the movement of the operator 12 is set in the direction detecting unit 107. This movement determination area can be set to be an arbitrary largeness according to a performance such as a resolution capable of separating two adjacent touch positions in the touch panel 101, and for example can be set to have radius of about 10 pixels. The direction detecting unit 107 determines that the operator 12 is moved, when the transmitted input positional information is changed exceeding a range of this movement determination area. In addition, when the transmitted input positional information is changed so as not to exceed the range of the movement determination area, the direction detecting unit 107 can determine that a so-called tapping motion is carried out by the operator 12. Whether or not the operator 12 moves is determined, regarding all pieces of input positional information transmitted at the same timing. Namely, when two coordinate values are transmitted as input positional information, at the same timing, the direction detecting unit 107 determines as described above, regarding each time variation of these two coordinate values.

Further, when the transmitted input positional information is changed, exceeding the range of the movement determination area, the direction detecting unit 107 detects the direction of vector formed by the locus drawn by the transmitted input positional information with elapse of time as the moving direction. The magnitude of the vector is a moving amount of the operator 12.

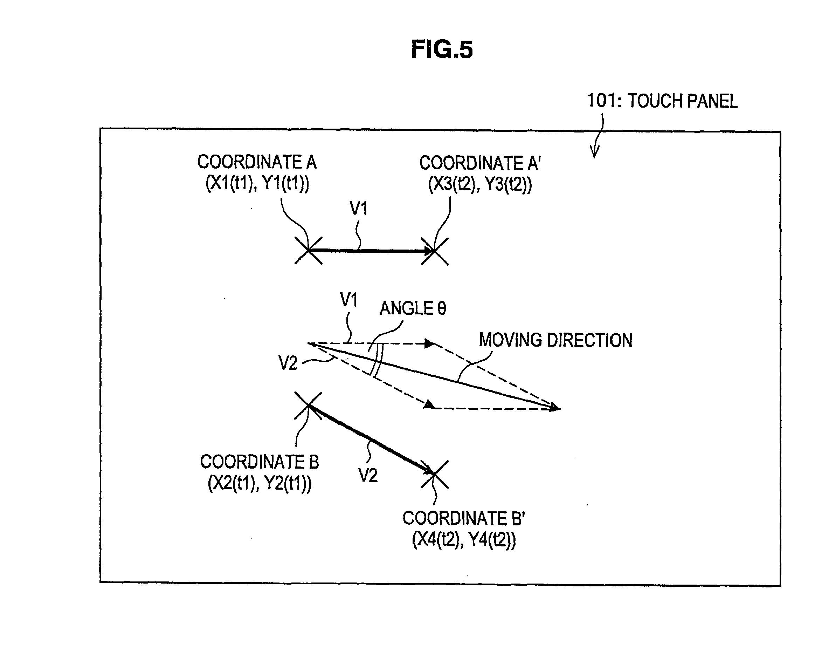

For example, FIG. 5 shows a case in which coordinate A(X1(t1), Y1(t1)) is transmitted at time t1 from the input position detecting unit 105, and the position at time t2 corresponding to the input positional information is defined by coordinate A'(X3(t2), Y3(t2)), and this case will be considered. At this time, the direction detecting unit 107 detects the direction shown by vector V1 defined by starting point coordinate A and ending point coordinate A', as the moving direction of the operator 12 touched on the coordinate A. Also, the direction detecting unit 107 sets the magnitude of the vector V1 as the moving amount of the operator 12.

Further, FIG. 5 shows a case in which the coordinate A(X1(t1), Y1(t1)) and the coordinate B(X2(t1), Y2(t1)) are transmitted at time t1 from the input position detecting unit 105, and this case will be considered. In this case also, vector V1 and vector V2 are respectively defined based on the coordinates A' and B' at time t2 corresponding to each input positional information. Here, when a plurality of pieces of input positional information are transmitted at the same timing, the direction detecting unit 107 does not determine each vector generated from each input positional information as the moving direction, but determines the moving direction in a method as follows.

For example, as shown in FIG. 5, the direction detecting unit 107 can determine the direction corresponding to the sum of the two vectors V1 and V2 as the moving direction. In addition, not only in a case that two input position coordinates are transmitted, but also in a case that three or more input position coordinates are transmitted at the same timing, the moving direction can be uniquely determined by taking a sum of the vectors of each input positional coordinate defined with elapse of time. When the moving direction is determined based on a plurality of vectors, the direction detecting unit 107 may also determine the magnitude of the sum of the vectors as the moving direction, or may determine the magnitude of any one of the vectors as the moving amount.

In addition, as shown in FIG. 5, the direction detecting unit 107 can determine the moving direction, by focusing angle θ formed by two vectors V1 and V2. In this case also, when three or more input position coordinates are transmitted at the same timing, first, the direction detecting unit 107 defines the vector of the input position coordinate defined with elapse of time. Subsequently, one vector among the defined vectors is focused, and an angle formed by this one vector and other vector is considered. Whereby, the direction detecting unit 107 can determine the moving direction. Namely, when the angle θ is smaller than a predetermined threshold value, and is for example an acute angle, this case shows that each vector indicates the same direction. Also, when the angle θ is larger than the predetermined threshold value, and for example is an obtuse angle, this case shows that each vector indicates a direction parting from each other.

The direction detecting unit 107 transmits direction information including the moving direction and the moving amount of the operator 12 detected as described above to the application controlling unit 109.

The application controlling unit 109 is constituted of, for example, CPU, ROM, RAM, and so forth, and performs execution control of each kind of application stored in the storage unit 117 and the ROM as will be described later. Contents that vary with elapse of time such as each kind of static image, etc, accompanied by moving picture content and music content, are displayed on the display screen of the display unit (not shown) by an application controlled by the application controlling unit 109. In addition, the contents displayed on the display screen can be scrolled, namely, fast-forwarded, and rewound according to a predetermined operation by this application. As an example of such an application, for example, playback application for reproducing the moving picture contents and playback application capable of compositively reproducing music contents and contents such as static image can be given. For example, as shown in FIG. 3, the application controlling unit 109 further includes a reproduction speed changing unit 111 and a reproducing direction changing unit 113.

The reproduction speed changing unit 111 is constituted of, for example, CPU, ROM, and RAM, and based on the input positional information transmitted from the input position detecting unit 105, the application controlling unit 109 changes the reproduction speed of the contents displayed on the display screen.

The time required for completing reproduction of contents is a standard reproducing time, when contents data corresponding to the reproduced contents is reproduced with no particular processing applied thereto. The speed required for completing the reproduction of the contents within the standard reproducing time is the standard reproduction speed. When the reproduction speed exceeds the standard reproduction speed by one-multi speed, reproduction of the contents is completed in a shorter time than the standard reproducing time. Reversely, when the reproduction speed is less than one-multi speed of the standard reproduction speed, reproduction of the contents is completed in a longer time than the standard reproducing time. The reproduction speed exceeding the standard reproduction speed by one-multi speed is set when the contents are fast-forwarded or rewound. Also, the reproduction speed less than one-multi speed of the standard reproduction speed is set when slow reproduction of contents is performed.

More specifically, the reproduction speed changing unit 111 changes the reproduction speed of the contents according to the number of coordinate values transmitted from the input position detecting unit 105. In addition, the reproduction speed changing unit 111 increases the reproduction speed as the number of the transmitted coordinate values is increased, and decreases the reproduction speed as the number of the coordinate values is decreased. This changing processing of the reproduction speed is, for example, continuously performed.

The relation between the number of the transmitted coordinate values and the reproduction speed in the running application, is freely defined for every application, and for example, may be recorded in the storage unit 117 as will be described later in a form of a database and a correspondence table. Also, the relation between the number of the transmitted coordinate values and the reproduction speed in the running application may be previously defined in the application.

The reproduction speed changing unit 111 changes a switching timing of the display contents displayed in the display unit (not shown) according to the changed reproduction speed, and requests the display controlling unit 115 to control the display screen.

The reproducing direction changing unit 113 is constituted of, for example, CPU, ROM, and RAM, and based on the direction information transmitted from the direction detecting unit 107, makes the reproducing direction of the contents displayed in the display screen, coincide with the moving direction of the operator 12. More specifically, when the moving direction of the operator 12 transmitted from the direction detecting unit 107 is approximately identical to the direction of elapse time in the contents, the reproducing direction changing unit 113 changes the reproducing direction to a direction of forwarding reproduction elapse time of contents. Reversely, when the moving direction of the operator 12 transmitted from the direction detecting unit 107 is opposite to the direction of elapse time in the contents, the reproducing direction is changed to a direction of rewinding the reproduction elapse time of the contents. For example, in a case that each image constituting the moving picture contents is advanced to the right side from the left side of the display screen, the reproducing direction changing unit 113 changes the reproducing direction of the moving picture contents to a direction of forwarding the reproduction elapse time of contents, when the direction detecting unit 107 transmits a message that the operating direction of the operator 12 is a right direction. Also, when the direction detecting unit 107 transmits a message that the operating direction of the operator 12 is a left direction, the reproducing direction changing unit 113 changes the reproducing direction of the moving picture contents to a direction of rewinding the reproduction elapse time of contents.

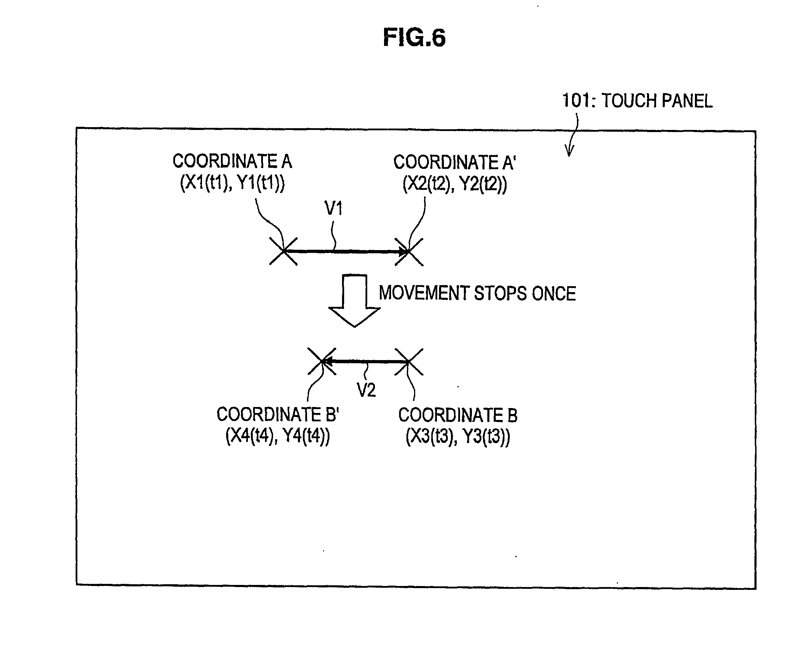

In addition, a plurality of coordinates are assumed to be transmitted to the reproducing direction changing unit 113 from the direction detecting unit 107 with elapse of time. Here, for example as shown in FIG. 6, coordinate A(X1(t1), Y1(t1)) is transmitted at a certain time t1, and the position at time t2 corresponding to the input positional information is defined by coordinate A'(X2(t2), Y2(t2)), and this case will be considered. In this case, since the moving direction of the operator 12 is a right direction, the reproducing direction changing unit 113 sets the reproducing direction of reproducing contents to a direction of forwarding. Also, when coordinate B (X3(t3), Y3(t3)) is transmitted at time t3 after the movement of the operator 12 stops at coordinate A' once, and the position at time t4 corresponding to this input positional information is defined by coordinate B'(X4(t4), Y4(t4)), in this case, the moving direction of the operator 12 at time t3 to time t4 is a left direction as shown in FIG. 6. In this case, since the movement of the operator 12 stops once between time t2 and time t3, the reproducing direction changing unit 113 changes the reproducing direction set in a forwarding direction once, to a rewinding direction corresponding to the left direction.

Thus, when the operator 12 continues to move between a certain time and a certain time, the reproducing direction changing unit 113 determines the reproducing direction based on a positional relation between a movement starting position of the operator 12 and a movement ending position of the operator 12. However, when the movement of the operator 12 stops once, the movement of the operator 12 is determined to be two steps, and the reproducing direction corresponding to the moving direction of each step is respectively determined.

In addition, it may be also possible to consider a case such as transmitting the movement of the operator 12 corresponding to a predetermined gesture from the direction detecting unit 107, after moving the operator 12 for determining the reproducing direction. In such a case, the application controlling unit 109 may set the reproducing direction according to a newly transmitted moving direction of the operator 12, while maintaining a set value of a reproduction speed which is set once.

The reproducing direction changing unit 113 changes the reproducing direction of the contents displayed in the display screen for displaying in the display unit (not shown) according to the determined reproducing direction, and requests the display controlling unit 115 to control the display screen.

The display controlling unit 115 is a means for controlling arbitrary information, so that information is displayed in the display unit (not shown). The display controlling unit 115 reads display data recorded in the storage unit 117 as will be described later, and makes it displayed in the display unit (not shown) based on an instruction of the application controlling unit 109.

Further, the display controlling unit 115 controls the reproduction speed of the contents displayed in the display unit based on the instruction transmitted from the reproduction speed changing unit 111. Further, the display controlling unit 115 controls the reproducing direction of the contents displayed in the display unit based on the instruction transmitted from the reproducing direction changing unit 113. As a result, the contents displayed in the display unit are reproduced at a reproduction speed according to the number of operators 12, in a direction of movement of the operator 12. Namely, when the moving direction corresponding to forwarding is input, the contents are forwarded at a reproduction speed according to the number of the operators 12, and a user can retrieve the contents at a desired seeking speed. Reversely, when the moving direction corresponding to rewinding is input, the contents are rewound at a reproduction speed according to the number of operators 12, and the user can retrieve the contents at a desired seeking speed.

The storage unit 117 stores each kind of application executed by the application controlling unit 109 of the information processing apparatus 10 according to this embodiment. Also, the storage unit 117 stores data regarding the information displayed in the display unit by the application which is execution-controlled by the application controlling unit 109. The application stored in the storage unit 117 is read and executed by the application controlling unit 109. Further, display data recorded in the storage unit 117 is read and displayed in the display screen by the running application.

Also, the storage unit 117 stores object data displayed in the touch panel 101. The object data here includes arbitrary parts constituting a graphical user interface such as icon, button, and thumbnail. Also, the storage unit 117 stores attribute information in association with individual object data. The attribute information includes, for example, date/time of preparation, date/time of update, preparing person's name, updating person's name of substance data, kind of the substance data, size of the substance data, level of importance, and priority.

In addition, other than the aforementioned data, it is possible to store in the storage unit 117, various parameters required to be saved when some processing is performed by the information processing apparatus 10 and a state of processing in progress, or may be possible to appropriately store each kind of database, etc. The input position detecting unit 105, the direction detecting unit 107, the application controlling unit 109, the reproduction speed changing unit 111, the reproducing direction changing unit 113, the display controlling unit 115, etc, can freely read and write data in this storage unit 117.

As described above, an example of the functions of the information processing apparatus 10 according to this embodiment is shown. The aforementioned each constituent element may be constituted by using a member and a circuit for general purpose, or may be constituted by hardware specialized in the function of each constituent element. Moreover, the function of each constituent element may be performed entirely by CPU, etc. Accordingly, the configuration can be appropriately changed according to an occasional technical level when this embodiment is executed.

In addition, it may be also possible to prepare a computer program for realizing each function of the information processing apparatus 10 according to the aforementioned embodiment of the present invention, and implement it in a personal computer, etc.

### <Regarding information processing method>

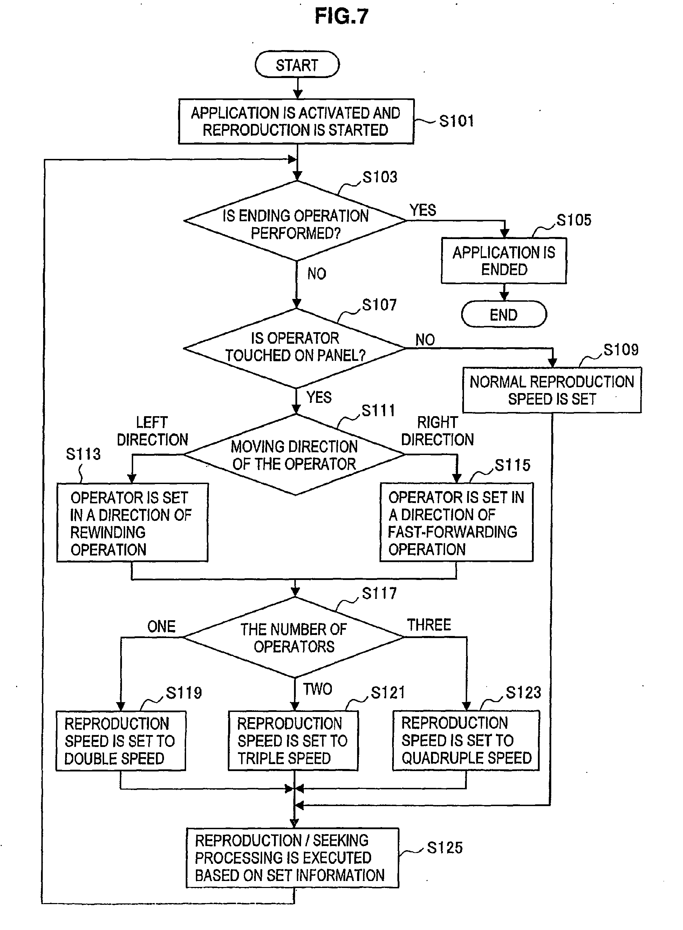

Subsequently, an information processing method according to this embodiment will be described in detail with reference to FIG. 7. FIG. 7 is a flowchart for describing the information processing method according to this embodiment.

First, a user of the information processing apparatus 10 operates the touch panel 101 by using the operator 12 such as a finger or a stylus, and selects the object such as an icon in association with a desired application to be executed. Thus, the application controlling unit 109 of the information processing apparatus 10 activates the application in association with the selected object, and starts reproduction of the contents (step S101).

Subsequently, the application controlling unit 109 waits for the input by the user, and determines whether or not an ending operation of the application is input (step S103). When the ending operation of the application is input by the user, the application controlling unit 109 ends the running application (step S105).

When the ending operation of the application is not input, the application controlling unit 109 further waits for the input by the user.

When the user touches on the touch panel 101 by operating the operator 12, the input position detecting unit 105 detects the position touched on the touch panel 101 by the operator 12 (step S107), and transmits the coordinate value corresponding to the touch position as the input positional information, to the direction detecting unit 107 and the application controlling unit 109. In addition, when the operator 12 is not touched on the touch panel 101, the application controlling unit 109 sets the reproduction speed of the contents as a normal reproduction speed (namely, standard reproduction speed) (step S109).

The direction detecting unit 107 to which the input positional information is transmitted from the input position detecting unit 105 detects the moving direction of the operator 12 based on the time variation of the transmitted input positional information (step S111). More specifically, the direction detecting unit 107 sets the direction of the vector formed by the locus drawn by the time variation of the transmitted coordinate value as the moving direction, and sets the magnitude of the vector as the moving amount. When there are a plurality of coordinate values transmitted at the same timing, the direction corresponding to the sum of the vectors according to the time variation of each coordinate value is set as the moving direction by the direction detecting unit 107.

The direction detecting unit 107 transmits the detected direction information including the moving direction to the reproducing direction changing unit 113 of the application controlling unit 109.

The reproducing direction changing unit 113, to which the direction information is transmitted, determines the reproducing direction of the contents according to the moving direction included in the direction information. Namely, when the moving direction of the operator 12 is the left direction, the reproducing direction changing unit 113 sets the reproducing direction in a direction of rewinding the reproducing time of the contents (step S113). Also, when the moving direction of the operator 12 is the right direction, the reproducing direction changing unit 113 sets the reproducing direction in a direction of fast-forwarding the reproducing time of the contents (step S 115). The reproducing direction changing unit 113 requests the display controlling unit 115 to control the display screen, so as to change the contents displayed in the display unit (not shown) according to the determined reproducing direction.

Meanwhile, the reproduction speed changing unit 111 of the application controlling unit 109 to which the input positional information is transmitted, changes the reproduction speed according to the number of transmitted coordinate values (namely, the number of the operators 12) (step S117). Namely, when the number of the operators 12 is one, the reproduction speed changing unit 111 sets the reproduction speed of the contents to double speed (step S 119). In addition, when the number of the operators 12 is two, the reproduction speed changing unit 111 sets the reproduction speed of the contents to triple speed (step S121). Also, when the number of the operators 12 is three, the reproduction speed changing unit 111 sets the reproduction speed of the contents to quadruple speed (step S123). Subsequently, the reproduction speed changing unit 111 changes the speed of switching the screen of the contents displayed in the display unit (not shown) according to the reproduction speed after change, and requests the display controlling unit 115 to control the display screen.

The display controlling unit 115, to which an instruction request regarding the display control of the display screen is transmitted from the application controlling unit 109, the reproduction speed changing unit 111, and the reproducing direction changing unit 113, controls display contents displayed in the display unit (not shown) based on the content of the instruction transmitted from each processing unit (step S125).

When the change of the display content is ended, processing is returned to step S103 again, and the information processing apparatus 10 waits for the input from the user.

In addition, in the information processing method according to this embodiment, first, explanation is given regarding a case that the reproducing direction of the contents is set based on the moving direction of the operator 12, and thereafter the reproduction speed of the contents is set based on the number of the operators 12. However, the present invention is not limited to the aforementioned example. For example, after the reproduction speed of the contents is set based on the number of operators 12, the reproduction speed of the contents may be set based on the moving direction of the operator 12. Moreover, the reproduction speed of the contents and the reproducing direction of the contents may be set in parallel.

As described above, in the information processing method according to this embodiment, the reproduction speed of the contents is changed according to the number of operators 12 such as fingers and stylus used in the input, and the reproducing direction of the contents is changed according to the moving direction of the operator 12. Thus, in the information processing method according to this embodiment, seamless and intuitive operation can be realized. In addition, in the information processing method according to this embodiment, it is possible to provide an operation system capable of easily performing a fine adjustment of the reproduction speed only by performing an easy operation such as adjusting the number of the fingers and stylus during operation.

### <Regarding an application example to the moving picture reproducing application>

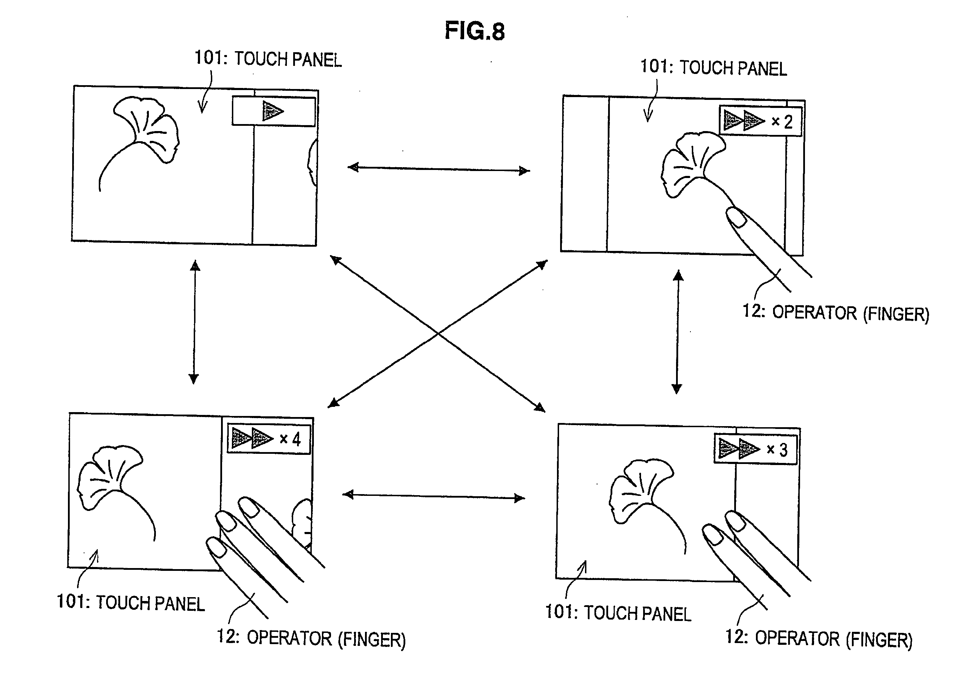

Subsequently, an example of a case that the information processing method according to this embodiment applied to the moving picture reproducing application will be described in detail with reference to FIG. 8. FIG. 8 is an explanatory view for describing an application example of the information processing method according to this embodiment.

In the moving picture reproducing application, fast-forwarding/rewinding operation leading to a target scene in a moving picture is frequently performed. Therefore, the reproduction speed is changed by dragging the operator 12 such as fingers in a lateral direction by using this technique, and the reproduction speed can be changed according to the number of operators 12 in such a manner as "double speed" by one finger, "triple speed" by two fingers, and "quadruple speed" by three fingers. In this application example, for example, fast-forwarding is performed by an operation from left to right, and rewinding is performed by an operation from right to left.

The user can adjust the speed intuitively and seamlessly by using, for example, only fingers as the operator 12. For example, when the fast-forwarding operation leading to an arbitrary scene is performed, first large fast-forwarding is performed by three fingers, then operation is performed by two fingers, with one finger set apart when approaching a target scene, and operation is performed by one finger, with one more finger set apart when further approaching the target scene. Thus, by gradually reducing the number of operators, the fine adjustment is possible. For example, as shown in FIG. 8, by sequentially performing the processing according to the number of fingers, the seeking speed can be changed with fingers touched on the touch panel, being the input device.

In a case of the gesture operation on a normal touch panel, when allotting a certain function in the lateral direction, other function needs to be allotted to a vertical gesture or needs to be allotted to a GUI button. However, in this technique, fast-forwarding/rewinding of several stages is possible only in the lateral direction. By using only the direction easy to recall the operation such as "next" or "forward" in the lateral direction, it is possible to further allot the operation to the gesture in the same direction, in which although the meaning of the motion such as "double speed", "triple speed", and "quadruple speed" is the same, only a transition amount is different.

Further, a point that a further larger unit can be changed according to the number of operators, is the same as a phenomenon that in a physical world, if the number of fingers is increased, it is easy to throw strength into an object, thus making it possible to largely move the object. Therefore, intuitive understanding of the user is encouraged, thus reducing the load of learning.

### <Regarding hardware configuration>

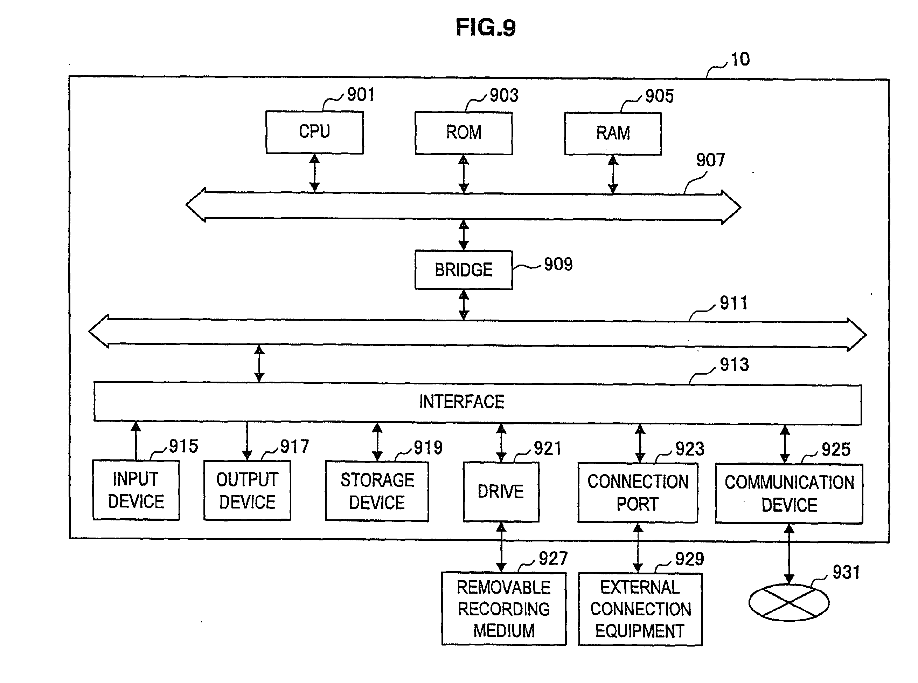

Next, a hardware configuration of the information processing apparatus 10 according to embodiments of the present invention will be described in detail with reference to FIG. 9. FIG. 9 is a block diagram for describing the hardware configuration of the information processing apparatus 10 according to embodiments of the present invention.

The information processing apparatus 10 mainly includes CPU 901, ROM 903, and RAM 905. In addition, the information processing apparatus 10 further includes a host bus 907, a bridge 909, an external bus 911, an interface 913, an input device 915, an output device 917, a storage device 919, a drive 921, a connection port 923, and a communication device 925.

The CPU 901 functions as an arithmetic operation device and a control device, and controls an overall operation or a part of the operation of the information processing apparatus 10, in accordance with each kind of program recorded in the ROM 903, the RAM 905, the storage device 919, or a removable recording medium 927. The ROM 903 stores a program or an arithmetic operation parameter, etc, used by the CPU 901. The RAM 905 temporarily stores the program used in executing the CPU 901 and parameters, etc., that vary appropriately in executing the CPU 901. They are connected to each other by the host bus 907 which is constituted of an internal bus such as a CPU bus.

The host bus 907 is connected to the external bus 911 such as PCI (Peripheral Component Interconnect/Interface) bus, through the bridge 909.

The input device 915 is an operation means for operating, for example, a mouse, a keyboard, a touch panel, a button, a switch, and a lever, by the user. Further, the input device 915 may be, for example, a remote control means (so-called remote controlling unit) utilizing, for example, infrared rays or other radio waves, and also may be external connecting equipment 929 such as a cell-phone and a PDA responding to the operation of the information processing apparatus 10. Further, the input device 915 is constituted of, for example, an input control circuit, etc, for generating an input signal based on the information input by the user by using the aforementioned operation means, and outputting it to the CPU 901. By operating the input device 915, the user of the information processing apparatus 10 can input each kind of data into the information processing apparatus 10 and can give an instruction of processing operation to the information processing apparatus 10.

The output device 917 is constituted of a device capable of visually and aurally notifying the user of the acquired information. As such a device, display devices such as a CRT display device, a liquid crystal display device, a plasma display device, an EL display device and a lamp, a voice output device such as a speaker and a headphone, a printer device, a cell-phone, and a facsimile, can be given. The output device 917, for example, outputs a result obtained by each kind of processing performed by the information processing apparatus 10. Specifically, the display device displays the result obtained by each kind of processing performed by the information processing apparatus 10, by text or image. Meanwhile, the voice output device converts an audio signal such as reproduced voice data and audio data into an analog signal and outputs this converted signal.

The storage device 919 is a device for storing data constituted as an example of the storage unit of the information processing apparatus 10. The storage device 919 is constituted of, for example, a magnetic storage device such as an HDD (Hard Disk Drive), a semiconductor storage device, an optical storage device, or a magneto-optical storage device. This storage device 919 stores the program and each kind of data executed by the CPU 901 and audio signal data and image signal data acquired from outside.

The drive 921 is a reader/writer for recording medium, and is incorporated or externally mounted in the information processing apparatus 10. The drive 921 reads the information recorded in mounted magnetic disc, optical disc, magneto-optical disc, or removable recording medium 927 such as a semiconductor memory, and outputs it to the RAM 905. Also, the drive 921 can write the recorded information into the mounted magnetic disc, the optical disc, the magneto-optical disc, or the removable recording medium 927 such as a semiconductor memory. The removable recording medium 927 is, for example, DVD media, HD-DVD media, and Blu-ray media, or the like. Also, the removable recording medium 927 may be a Compact Flash (CF) (registered trademark), a memory stick, or a SD memory card (Secure Digital memory card), or the like. Further, the removable recording medium 927 may also be, for example, a non-contact type IC-chip built-in IC card (Integrated Circuit card) or electronic equipment, or the like.

The connection port 923 is a port for directly connecting equipment to the information processing apparatus 10. As an example of the connection port 923, USB (Universal Serial Bus) port and IEEE1394 port such as i.Link, and SCSI (Small Computer System, Interface) port, etc, can be given. As another example of the connection port 923, RS-232C port, optical audio terminal, and HDMI (High-Definition Multimedia Interface) port, or the like can be given. By connecting the external connection equipment 929 to this connection port 923, the information processing apparatus 10 directly acquires the audio signal data and the image signal data from the external connection equipment 929, or provides the audio signal data and the image signal data to the external connection equipment 929.

The communication device 925 is, for example, a communication interface constituted of a communication device, etc, for connecting to a communication network 931. The communication device 925 is, for example, a communication card for a wired or wireless LAN (Local Area Network), Bluetooth, or WUSB (Wireless USB). Also, the communication device 925 may be a router for optical communication, a router for ADSL (Asymmetric Digital Subscriber Line), or a modem for each kind of communication. This communication device 925 can transmit/receive a signal, etc, in conformity with a predetermined protocol such as TCP/IP, for example between internet and other communication equipment. Also, the communication network 931 connected to the communication device 925 is constituted of a wiredly or wirelessly connected network, etc., and may be, for example, the internet, domestic LAN, infrared communication, radio wave communication, or satellite communication, or the like.

As described above, an example of a hardware configuration capable of realizing the function of the information processing apparatus 10 according to embodiments of the present invention is shown. The aforementioned each constituent element may be constituted by using a member for general purpose of use, or may be constituted by hardware specialized in the function of each constituent element. Accordingly, the utilized hardware configuration may be changed appropriately according to an occasional technical level at the time of executing this embodiment.

### <Summary>

As described above, in the information processing apparatus and the information processing method according to embodiments of the present invention, it is possible to realize the intuitive operation system such that the operating direction of the operator and the reproducing direction of the contents coincide with each other. In addition, since the operation system has a consistency, the user is not confused. Moreover, the reproduction speed can be adjusted seamlessly and by adjusting the number of operators during operation, the operation system easy to perform fine adjustment can be realized, and a plurality of parameters can be changed in a direction easy to recall the operation result. Further, the parameters can be changed based on the moving direction and the number of operators, and therefore there is no necessity for disposing a plurality of operation buttons over the information processing apparatus, thus contributing to reducing a size of the information processing apparatus. Thus, in the information processing apparatus and the information processing method according to embodiments of the present invention, it is possible to reproduce a phenomenon experienced in a physical world, and realize the intuitive operation system capable of encouraging understanding.

The present application contains subject matter related to that disclosed in Japanese Priority Patent Application JP 2008-276227 filed in the Japan Patent Office on October/28/2008.

It should be understood by those skilled in the art that various modifications, combinations, sub-combinations and alterations may occur depending on design requirements and other factors insofar as they are within the scope of the appended claims.

For example, in the aforementioned embodiments, a case of the moving picture content is given as an example of the contents. However, even in a case of music contents, this system can also be applied.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An information processing apparatus, comprising:
an input position detecting unit that detects a position of an operator positioned on an operation input unit;
a direction detecting unit that detects a moving direction of the operator based on a time variation of the detected position of the operator;
a reproduction speed changing unit that changes a reproduction speed of contents varying with elapse of time displayed in a screen according to the number of operators detected by the input position detecting unit; and
a reproducing direction changing unit that changes a reproducing direction of the contents displayed in the screen according to the moving direction of the operator detected by the direction detecting unit.

2. The information processing apparatus according to claim 1, wherein the input position detecting unit outputs coordinates of the operator positioned on the operation input unit, and
the reproduction speed changing unit changes the reproduction speed according to the number of coordinates of the operators simultaneously transmitted from the input position detecting unit.

3. The information processing apparatus according to claim 2, wherein the reproduction speed changing unit increases the reproduction speed as the number of the operators is increased, and decreases the reproduction speed as the number of the operators is decreased.

4. The information processing apparatus according to claim 3, wherein the reproducing direction changing unit changes the reproducing direction to a direction of forwarding a reproduction elapse time of the contents when the moving direction is approximately the same as a direction of elapse time in the contents, and the reproducing direction is changed to a direction of rewinding the reproduction elapse time of the contents when the moving direction is opposite to the direction of elapse time in the contents.

5. The information processing apparatus according to claim 4, wherein the direction detecting unit selects a direction corresponding to a sum of vectors formed by a locus drawn by each of the operators as the moving direction, when the number of the operators is plural number.

6. The information processing apparatus according to claim 2, wherein the direction detecting unit determines a movement of the operators when the coordinates of the operators transmitted from the input position detecting unit change to a predetermined threshold value or more.

7. An information processing method, comprising the steps of:
detecting a position of an operator positioned on an operation input unit;
detecting a moving direction of the operator based on a time variation of the detected position of the operator;
changing a reproduction speed of contents varying with elapse of time displayed in a screen according to the number of detected operators; and
changing a reproducing direction of the contents displayed in the screen according to the moving direction of the operator detected by the direction detecting unit.

8. A program for causing a computer having an operation input unit to realize:
an input position detecting function of detecting a position of an operator positioned on the operation input unit;
a direction detecting function of detecting a moving direction of the operator based on a time variation of the detected position of the operator;
a reproduction speed changing function of changing a reproduction speed of contents varying with elapse of time displayed in a screen according to the number of operators detected by the input position detecting function; and
a reproducing direction changing function of changing a reproducing direction of the contents displayed in the screen according to a moving direction of the operator detected by the direction detecting function.
